Europäisches Patentamt

European Patent Office

Office européen des brevets

(19)

(11) Publication number: **0 224 648 B1**

# EUROPEAN PATENT SPECIFICATION

(12)

(45) Date of publication of patent specification: **16.10.91**   (51) Int. Cl.⁵: **C02F 3/20**

(21) Application number: **86111024.5**

(22) Date of filing: **09.08.86**

(54) Sewage oxygenating device.

(30) Priority: **04.12.85 IT 3086185 U**

(43) Date of publication of application:
**10.06.87 Bulletin 87/24**

(45) Publication of the grant of the patent:
**16.10.91 Bulletin 91/42**

(84) Designated Contracting States:
**AT BE CH DE FR GB LI LU NL SE**

(56) References cited:
**US-A- 2 543 813**
**US-A- 3 996 139**
**US-A- 4 308 138**

(73) Proprietor: **VARISCO POMPE S.p.A.**
**Zona Industriale Nord 3a Strada, 9**
**I-35100 Padova(IT)**

(72) Inventor: **Varisco, Giuseppe**
**Via Turazza 31**
**I-35129 Padova(IT)**

(74) Representative: **Modiano, Guido et al**
**MODIANO, JOSIF, PISANTY & STAUB**
**Modiano & Associati Via Meravigli, 16**
**I-20123 Milano(IT)**

Rank Xerox (UK) Business Services

## Description

This invention relates to a device for oxygenating sewage as contained in a collector tank.

Today's stables for breeding animals may have a base composed of a grid through which sewage can drain for later collection into a tank adjoining the stable.

In that condition, sewage has an acidic or alkaline reaction and a strong ammonia formation with consequent serious problems for both farmers and the animals.

In particular, pigs are intolerant of ammonia, developing eye and breathing trouble with consequent alimentary deficiencies and growth problems.

Furthermore, sewage in this condition cannot be sprinkled over the fields by reason of environmental hygiene and poor compatibility with the crop.

To partly solve that problem, it is known to use pumps which are submerged in the collector tank, such pumps drawing up the sewage and causing it to flow through a device, also placed in the tank, which draws air from the outside through pre-arranged piping.

Thus, sewage is oxygenated artificially.

The main problem of such known type oxygenators is that they are placed inside the sewage collector tank, which considerably increases the maintenance and checking operations required for inspection of the various components.

The addition of air to the sewage being treated is, moreover, quite limited, the air being drawn through a pre-arranged pipe and having, therefore, to overcome a considerable liquid head due to the arrangement.

US-A-3 996 139 shows a waste-liquid extraction, aeration and return system which includes an aspirator with a tapered cone member terminating in a small discharge nozzle which is surrounded by an end aperture of an elongate mixing chamber. The elongate mixing chamber is arranged downstream of the aspiraton point of the aspirator

It is the primary aim of this invention to remove such prior shortcomings affecting known types by providing a device for oxygenating sewage contained in a tank which afford optimum blending of same such that it can be utilised in a short time.

Within the above aim it is a further important object to provide a sewage oxygenating device which, in combination with the apparatus connectable to it, is inspectable in a quick and easy manner, maintenance being thus obtainable at very low cost.

Another important object is to provide a plant comprising a sewage oxygenating device which affords optimum addition of the air to be admixed with a large amount of sewage, therefore with fast oxygenation times.

A not least object is to provide a sewage oxygenating device which has low costs and can be made with ordinary plant.

The aim and objects listed above are achieved by a device for oxygenating sewage contained in a collector tank, as defined in claim 1.

Further features and advantages of the invention will be apparent from the detailed description of a particular embodiment form shown by way of illustration in the accompanying illustrative, non-limitative drawing sheet where:

Figure 1 shows a block diagram of a plant comprising the sewage oxygenating device; and

Figures 2 and 3 show, in two different views, the oxygenating device and the fins present on the constriction.

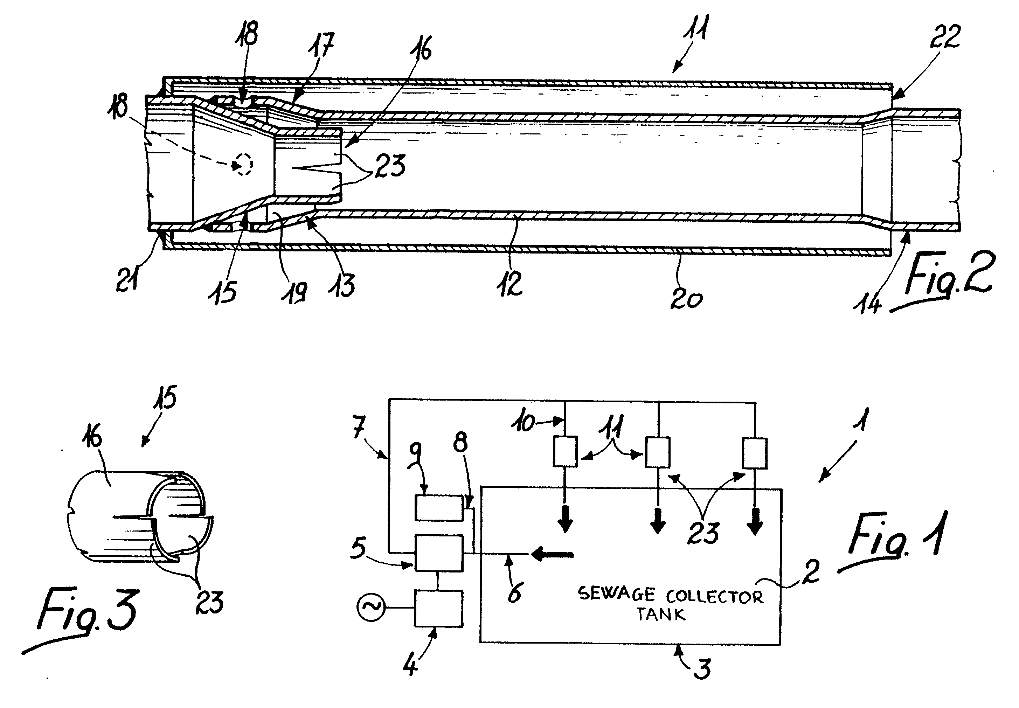

With reference to the previously cited drawing figures, indicated at 1 is a plant for oxygenating sewage 2 contained in a pre-arranged underlying collector tank 3, e.g. a grid forming the floor of that section of the stable where the animals are housed.

That plant comprises a motor 4 driving a pump 5 to which are connected intake 6 and delivery 7 conduits for the sewage 2.

Both the motor 4 and the pump 5 are preferably placed externally of the tank 3 and accordingly in areas adjoining the stable outer masonry work, the same being placeable into the tank 3.

At the intake conduit 6 there is connected an end of a further conduit 8, the other end whereof is submerged in a calibrated container 9 containing on its interior a biocatalyst.

That arrangement allows introduction of that biocatalyst directly into the circuit permitting fast diffusion through the mass and consequent immediate air conditioning.

Connected in parallel to the delivery conduit 7 are plural conduits 10 for circulating the sewage, placed externally of the tank; to each of said conduit there is connectable a device for oxygenating the sewage itself indicated at 11.

The device 11 is comprised of a tubular element 12 at the ends of which there are present first and second enlarged portions respectively indicated at 13 and 14.

At the first there is present a constriction or neck-like element 15 the terminating end 16 of which, of smaller diameter, is located internally of the portion 13. The end 16 could also have a polygonal shape.

At the lateral surface 17 of the portion 13 there are a plurality of advantageously circular openings 18 placed at 90° from each other and being formed at the interspace 19 defined between the inner lateral surfaces of the portion 13 and the exterior of the constriction 15. The interspace 19 communicates with the interior of the tubular element 12.

The larger diameter end of the constriction 15 will be moreover connectable to connection elements adapted to permit fast connection to and disconnection from the circulation conduit 10. Similar fittings will be rigidly associated with the terminating end of the portion 14.

Concentrically with the tubular element 12 there is placed a second tubular element 20 which has one end secured to the corresponding larger diameter end of the constriction or neck 15 by means of an intervening disk 21 which blocks off the end itself of the element 20.

The other end of the latter is instead free to define an opening 22 for air intake.

The end 16 also expediently has fins 23 adapted to increase the air-sewage turbulence.

The use of the device 11 to oxygenate the sewage 2 may envisage its use in a horizontal, oblique or vertical position; in the former case to the second tubular element 20 there may be formed a hole communicating with a conduit for draining any sewage flowing out through the ports 18, in the other cases the same being adapted to flow down toward the opening 22.

Steady state operation of the device 11 contemplates the introduction of the sewage at the constriction 15, there occurring a drop of the atmospheric pressure such as to permit the entry of ambient air through the ports 18 formed on the tubular element 12.

The constriction allows in fact an increase in the sewage velocity while reducing its pressure. The air which flows into the tubular element 12 blends with the sewage until it reaches the second portion 14 utilized for the purpose of increasing the pressure of the sewage itself. To the portion 14 there is also connected a conduit 23 the other end of which is placed inside the tank 3, it being orientable to create maximum turbulence in accordance with the geometry of the tank 3.

Of course the device 11 is conceived to permit, together with the load losses, at the outlet 23 a pressure approximately equal to atmospheric pressure so as to obtain at the inlet to the tubular element 12 an air whirlpool.

Of course also the ends of the conduits 6 and 23 placed inside the tank should be located at such levels as to create maximum turbulence, homogenisation and aeration of the sewage.

It has thus been shown that the invention achieves the aim and objects set forth, there been provided a device which affords optimum mixing of sewage so that it can be used within fast times and without leading to the formation of ammonia vapors.

By having moreover placed the device 11 externally of the tank it becomes possible, in conjunction with the fact that also the pump and circulating conduit 7 are external, to effect fast maintenance of the individual components of the whole plant at costs which show to be very low and to orient the conduit 23 so as to create maximum turbulence inside the tank 3. The air intake is moreover optimal the same being drawn in at atmospheric pressure and there being no liquid head to overcome.

Further being the biocatalyst taken in at the pump suction allows moreover fast diffusion of same through the masses with consequent immediate air conditioning thus overcoming the drawback consequent to the practice utilized heretofore of sprinkling that biocatalyst over the sewage surface.

The pump 5 could of course also be of the submerged type, in any case the device 11 picking up the sewage from the conduit 7 outside the tank.

Also any dimensions and materials may be used according to necessity.

## Claims

1. A device for oxygenating sewage contained in a collector tank, the device (11) being positioned externally to the collector tank (3) , the device (11) comprising an elongated tubular element (12) acting as a mixing chamber with a first end (13) and a second end (14), and a venturi constriction (15) with a small outlet end (16) and a large inlet end, the small outlet end (16) of the venturi constriction (15) being inserted in the first end (13) of the elongated tubular element (12), the large inlet end of the venturi constriction (15) being connected with an intake conduit (6) that carries sewage by means of a motor (4) and pump (5) from the collector tank (3), the second end (14) of the elongated tubular element (12) being connected to an outtake conduit (23) which carries away oxygenated sewage, the device (11) characterized in that the first end of the elongated tubular element (12) is constituted by a first enlarged portion (13) with a diameter larger than the diameter of the elongated tubular element (12), the first enlarged portion (13) being radially provided with a plurality of openings (18) , an interspace (19) which communicates between the plurality of openings (18) and the interior of the elongated tubular element (12) being defined between the internal lateral surface of the first enlarged portion (13) and the external lateral surface of the venturi constriction (15), a second tubular element (20) being furthermore provided which concentrically surrounds the elongated tubular element (12) and is sealed at the large inlet end of the venturi constriction (15) but defines an annular opening (22) for air-intake at its other end, whereby the air needed for oxygenating the sewage comes in through the annular opening (22), travels to the plurality of openings (18) and enters the interior of the elongated tubular element (2) via the interspace (19) and then mixes with the sewage therein.

2. A device according to claim 1, characterized in that the second tubular element (20) has an appropriate longitudinal length so that the annular opening (22) for air-intake is positioned at any desired point along the axis of the elongated tubular element (12).

3. A device according to the preceding claims, characterized in that the second end (14) of the elongated tubular element (12) is constituted by a second enlarged portion (14) with a diameter larger than the diameter of the elongated tubular element (12).

4. A device according to the preceding claims, characterized in that it further comprises connection elements for connecting the device (11) to the intake conduit (6) and the outtake conduit (23), whereby said connection elements make the device quickly and easily removable at both ends, thereby facilitating easy repair, maintenance, and connection or disconnection.

5. A device according to the preceding claims, characterized in that means are provided for removing any sewage flowing out from the plurality of openings (18) in the first enlarged portion (13).

6. A device according to the preceding claims, characterized in that the outtake conduit (23) constitutes means for carrying aerated sewage back to the collector tank (3), said intake (6) and outtake conduits (23) being arranged at positions inside the collector tank (3) so as create maximum turbulence, homogenization, blending and aeration of the sewage.

7. A device according to the preceding claims, characterized in that it further comprises a further conduit (8) and a calibrated container (9), said further conduit (8) being connected at one end to the intake conduit (6) at a point before the pump (5) and being connected at another end to the calibrated container (9), said further conduit (8) constituting means for drawing a biocatalyst from the calibrated container (9).

8. A device according to the preceding claims, characterized in that the device (11) is positionable along a plane that is parallel, oblique or perpendicular with respect to the corresponding plane of lay of the intake or outtake conduits.

9. A device according to the preceding claims, characterized in that a fin-like conformation (23) adapted to increase turbulence is provided at the small outlet end of the venturi constriction (15).

**Revendications**

1. Dispositif pour oxygéner des eaux usées contenues dans un réservoir de collecte, le dispositif (11) étant positionné à l'extérieur du réservoir de collecte (3), le dispositif (11) comprenant un élément tubulaire allongé (12) agissant comme chambre de mélangeage ayant une première extrémité (13) et une seconde extrémité (14), et un étranglement du type Venturi (15) ayant une petite extrémité de sortie (16) et une grande extrémité d'entrée, la petite extrémité de sortie (16) de l'étranglement (15) étant insérée dans la première extrémité (13) de l'élément tubulaire allongé (12), la grande extrémité d'entrée de l'étranglement (15) étant reliée à un conduit d'admission (6) qui amène les eaux usées au moyen d'un moteur (4) et d'une pompe (5) à partir du réservoir de collecte (3), la seconde extrémité (14) de l'élément tubulaire allongé (12) étant reliée à un conduit de distribution (23) qui évacue les eaux usées oxygénées, le dispositif (11) étant caractérisé en ce que la première extrémité de l'élément tubulaire allongé (12) est constituée par une première partie élargie (13) ayant un diamètre plus grand que le diamètre de l'élément tubulaire allongé (12), la première partie élargie (13) étant radialement munie d'une pluralité d'ouvertures (18), un interespace (19) qui communique entre la pluralité d'ouvertures (18) et l'intérieur de l'élément tubulaire allongé (12) étant défini entre la surface latérale interne de la première partie élargie (13) et la surface latérale externe de l'étranglement (15), un second élément tubulaire (20) étant de plus prévu, lequel entoure, de façon concentrique, l'élément tubulaire allongé (12) et est fermé de façon étanche à la grande extrémité d'entrée de l'étranglement (15), mais définit une ouverture annulaire (22) pour l'entrée d'air à son autre extrémité, grâce à quoi l'air nécessaire pour oxygéner les eaux usées entre à travers l'ouverture annulaire (22), se déplace vers la pluralité d'ouvertures (18) et entre à l'intérieur de l'élément tubulaire allongé (12) via l'interespace (19), puis s'y mélange avec les eaux usées.

2. Dispositif selon la revendication 1, caractérisé en ce que le second élément tubulaire (20) présente une longueur longitudinale appropriée de sorte que l'ouverture annulaire (22) pour l'entrée d'air est positionnée en un point souhaité quelconque le long de l'axe de l'élément tubulaire allongé (12).

3. Dispositif selon les revendications précédentes, caractérisé en ce que la seconde extrémité (14) de l'élément tubulaire allongé (12) est constituée par une seconde partie élargie (14) ayant un diamètre plus grand que le diamètre de l'élément tubulaire allongé (12).

4. Dispositif selon les revendications précédentes, caractérisé en ce qu'il comprend de plus des éléments de liaison pour relier le dispositif (11) au conduit d'admission (6) et au conduit de distribution (23), grâce à quoi lesdits éléments de liaison rendent le dispositif rapidement et facilement amovible aux deux extrémités, en facilitant ainsi la réparation, la maintenance, et la connexion ou la déconnexion.

5. Dispositif selon les revendications précédentes, caractérisé en ce que des moyens sont prévus pour évacuer toute eau usée s'écoulant de la pluralité d'ouvertures (18) dans la première partie élargie (13).

6. Dispositif selon les revendications précédentes, caractérisé en ce que le conduit de distribution (23) constitue des moyens pour ramener les eaux usées aérées au réservoir de collecte (3), ledit conduit d'admission (6) et ledit conduit de distribution (23) étant agencés en des positions à l'intérieur du réservoir de collecte (3) de façon à créer, au maximum, des turbulences, l'homogénéisation, le mélangeage et l'aération des eaux usées.

7. Dispositif selon les revendications précédentes, caractérisé en ce qu'il comprend de plus un autre conduit (8) et un conteneur calibré (9), ledit autre conduit (8) étant relié à une extrémité au conduit d'admission (6) en un point avant la pompe (5) et étant relié à l'autre extrémité au conteneur calibré (9), ledit autre conduit (8) constituant des moyens pour amener un biocatalyseur à partir du conteneur calibré (9).

8. Dispositif selon les revendications précédentes, caractérisé en ce que le dispositif (11) peut être placé le long d'un plan qui est parallèle, oblique ou perpendiculaire par rapport au plan correspondant des conduits d'admission ou de distribution.

9. Dispositif selon les revendications précédentes, caractérisé en ce qu'une structure en forme d'ailettes (23) adaptée pour augmenter les turbulences est prévue à la petite extrémité de sortie de l'étranglement (15).

**Patentansprüche**

1. Vorrichtung für die Sauerstoffanreicherung von in einem Sammelbehälter enthaltenem Abwasser, wobei die Vorrichtung (11) außerhalb des Sammelbehälters (3) angeordnet ist, die Vorrichtung (11) ein langgestrecktes rohrförmiges Element (12) umfaßt das als Mischkammer dient mit einem Ende (13) und einem zweiten Ende (14), und eine Venturieinschnürung (15) mit einem kleinen Auslaßende (16) und einem großen Einlaßende, wobei das kleine Auslaßende (16) der Venturieinschnürung (15) in das erste Ende (13) des langgestreckten rohrförmigen Elements (12) eingesetzt ist, das große Einlaßende der Venturieinschnürung mit einer Einlaßleitung (6) verbunden ist, die mittels eines Motors (4) und einer Pumpe (5) Abwasser von dem Sammelbehälter (3) leitet, das zweite Ende (14) des langgestreckten rohrförmigen Elementes (12) mit einer Auslaßleitung (23) verbunden ist die mit Sauerstoff angereichertes Abwasser weg leitet, die Vorrichtung (11) ist dadurch gekennzeichnet, daß das erste Ende des langgestreckten rohrförmigen Elements (12) durch einen ersten vergrößerten Bereich (13) mit einem Durchmesser der größer ist als der Durchmesser des langgestreckten rohrförmigen Durchmessers (12) gebildet wird, der erste vergrößerte Abschnitt (13) radial mit einer Vielzahl von Öffnungen (18) versehen ist, ein Zwischenraum (19) der mit der Vielzahl der Öffnungen (18) und dem Inneren des langgestreckten rohrförmigen Elements (12) verbunden ist sich zwischen der inneren Seitenfläche des ersten vergrößerten Abschnitts (13) und der äußeren Seitenfläche der Venturieinschnürung (15) ergibt, ein zweites rohrförmiges Element (20) weiterhin das langgestreckte rohrförmige Element (12) konzentrisch umgebend vorgesehen ist und an dem großen Einlaßende der Venturieinschnürung (15) abgedichtet ist, wobei eine ringförmige Öffnung (22) für einen Lufteinlaß an dessen anderen Ende vorgesehen ist, wobei die für eine Sauerstoffanreicherung des Abwassers erforderliche Luft über die ringförmige Öffnung (22) eintritt, zu der Vielzahl von Öffnungen (18) strömt und in das Innere des langgestreckten rohrförmigen Elements (12) über den Zwischenraum (19) eintritt und sich dann mit dem darin enthaltenen Abwasser vermischt.

2. Vorrichtung nach Anspruch 1, dadurch gekennzeichnet, daß das zweite rohrförmige Element (20) eine geeignete Länge in Längsrichtung hat, so daß die ringförmige Öffnung (22) für den Lufteinlaß an einem vorgebbaren Punkt entlang der Achse des langgestreckten rohrförmigen Elements (12) positionierbar ist.

3. Vorrichtung nach einem der vorstehenden Ansprüche, dadurch gekennzeichnet, daß das zweite Ende (14) des langgestreckten rohrförmigen Elements (12) durch einen zweiten vergrößerten Bereich (14) mit einem Durchmesser gebildet wird, der größer ist als der Durchmesser des langgestreckten rohrförmigen Elements (12).

4. Vorrichtung nach einem der vorstehenden Ansprüche, dadurch gekennzeichnet, daß sie weiter Verbindungselemente zum Verbinden der Vorrichtung 11 mit der Einlaßleitung (6) und der Auslaßleitung (23) aufweist, wobei die Verbindungselemente ein schnelles und einfaches Entfernen der Vorrichtung an den beiden Enden ermöglichen, so daß eine einfache Reparatur, Wartung und ein Verbinden oder Lösen ermöglicht wird.

5. Vorrichtung nach einem der vorstehenden Ansprüche, dadurch gekennzeichnet, daß Mittel zum Entfernen von über die Vielzahl der Öffnungen (18) in den ersten vergrößerten Bereich (13) ausströmenden Abwassers vorgesehen sind.

6. Vorrichtung nach einem der vorstehenden Ansprüche, dadurch gekennzeichnet, daß die Auslaßleitung (23) Mittel zum Leiten von mit Sauerstoff angereichertem Abwasser zurück in den Sammelbehälter (3) aufweist, daß die Einlaßleitung (6) und die Auslaßleitung (23) in Positionen des Sammelbehälters (3) derart angeordnet sind, daß eine maximale Turbulenz, Homogenisierung, Mischung und Saurestoffanreicherung des Abwassers erreicht wird.

7. Vorrichtung nach einem der vorstehenden Ansprüche, dadurch gekennzeichnet, daß sie eine weitere Leitung (8) und einen kalibrierten Behälter (9) umfaßt, wobei die weitere Leitung (8) an einem Ende mit der Einlaßleitung (6) an einer Stelle vor der Pumpe (5) verbunden ist und an dem anderen Ende mit dem kalibrierten Behälter (9), wobei die weitere Leitung (8) ein Mittel zum Einbringen eines Biokatalysators von dem kalibrierten Behälter (9) ist.

8. Vorrichtung nach einem der vorstehenden Ansprüche, dadurch gekennzeichnet, daß die Vorrichtung (11) in einer Ebene positionierbar ist, die parallel, schräg oder senkrecht in Bezug auf eine entsprechende Lageebene der Einlaß- oder Auslaßleitung verläuft.

9. Vorrichtung nach einem der vorstehenden Ansprüche, dadurch gekennzeichnet, daß ein rippenartiger Aufbau (23) zum Vergrößern der Turbulenz an dem kleinen Auslaßende der Venturieinschnürung (15) vorgesehen ist.

*Fig. 2*

*Fig. 3*

SEWAGE COLLECTOR
TANK

*Fig. 1*

EP 0 224 648 B1